(19) **Europäisches Patentamt / European Patent Office / Office européen des brevets**

(11) **EP 1 835 683 A1**

(12) **EUROPEAN PATENT APPLICATION**

(43) Date of publication:
**19.09.2007 Bulletin 2007/38**

(51) Int Cl.:
*H04L 27/34* (2006.01)    *H04L 1/00* (2006.01)
*H04L 27/26* (2006.01)

(21) Application number: **06005411.1**

(22) Date of filing: **16.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **NOKIA SIEMENS NETWORKS GMBH & CO. KG**
**81541 München (DE)**

(72) Inventors:
• **Costa, Elena Dr.**
  **81739 München (DE)**
• **Raaf, Bernhard**
  **82061 Neuried (DE)**
• **Schulz, Egon Dr.**
  **80993 München (DE)**
• **Trifonov, Peter**
  **195256 St Petersburg (RU)**

(54) **Method for modulation of a codeword**

(57)    The invention relates to a method for modulation of a codeword, wherein the codeword comprises modulated symbols spanning over different chunks or chunk layer and a different modulation format can be used on each chunk or chunk layer. Within the transmission system OFDM-radio transmission techniques are used. A given data stream is partitioned into at least two sub-streams. A first sub-stream of the two sub-streams is then coded with an encoder. A fixed and equal number of coded bits from the first substream are mapped on each modulated symbol transmitted on the chunks, independently of the modulation format on each chunk. Bits from the second sub-stream of the two sub-streams are mapped on each modulated symbol of each chunk in a number depending on the modulation format.

FIG 1A

EP 1 835 683 A1

# FIG 1B

Selected bz
uncoded bits

15 ○ $\overbrace{0000}$
13 ◇ 0001
11 △ 0011
9 □ 0010
7 ○ 0100
5 ◇ 0101
3 △ 0111
1 □ 0110
-1 ○ 1100
-3 ◇ 1101
-5 △ 1111
-7 □ 1110
-9 ○ 1000
-11 ◇ 1001
-13 △ 1011
-15 □ $\underbrace{1010}$

Selected be coded bits $x^0, \ldots x^{l-1}$
Douple-Gray constellation labeling

## Description

The invention relates to a method for coding and modulation of data packets, where the coded data packet can span over different resource units. Each resource unit comprises a number of time and frequency bins, referred to as chunk. There is also the possibility to reuse the chunks in a spatial and/or code domain, i.e. chunk layer.

Orthogonal frequency division multiplexing, abbreviated "OFDM", is considered as leading technology for the air interface of UTRA LTE systems and so called "beyond" 3G wireless mobile systems.

Most advantageous characteristics of OFDM are shown by a high robustness to the radio channel time dispersion at the one hand and by a fine granularity and a high flexibility offered in the assignment of the frequency resources on the other hand, enabling an efficient use of an available bandwidth.

In order to exploit these characteristics it is known, that - to perform an adaptation to the channel propagation conditions - the conditions have to be determined over different portions of the bandwidth.

It is known, that in multi-user OFDM systems the adaptation can be carried out both in terms of "adaptive data rate and power allocation" on the one hand and in terms of "adaptive resource allocation" on the other hand.

For example "link adaptation" is a result of "adaptive data rate and power allocation".

For purposes of channel estimation and for signaling of resource allocation a "signaling overhead" has to be used, but the overhead increases with the time variability of the radio channel.

In order to reduce the signaling overhead, a minimum resource unit is represented by a "chunk".

In OFDM systems, a chunk is a rectangular area spanning a few adjacent sub-carriers on the one hand and a few successive OFDM symbols periods on the other hand.

A specific number of sub-carriers and of symbol periods in one chunk is selected according to the propagation scenario, i.e. in accordance to the channel coherence time and coherence bandwidth properties. The selection is done in such a kind, that within one chunk approximately flat fading and an approximate time invariant channel can be observed.

Additionally to the optimization of an overall system capacity, performed by link adaptation and adaptive resource allocation, there are different "Quality of Service, QoS" requirements of the user, which should be regarded.

In a packet-based transmission of data, the data packets belong to different traffic classes, which are characterized by different latency requirements and error probability requirements. In adaptive transmission systems there is the possibility to choose an error-correction-code among a number of error-correction-codes or within a set of error correcting codes.

This kind of error correcting codes show different lengths each. Therefore it is possible to select a tradeoff between error protection on the one hand and of message latency on the other hand.

Finally code-words, built by coding of packet data with the selected error-correcting-code, are mapped onto the signal constellations, selected according to the current channel state. The mapping is done straight forward.

But there is a serious problem occurring by the use of error correcting codes in adaptive chunk based transmission systems - this is the mapping of the code words on the chunks (especially long codewords on limited size chunks) and the joint implementation of link adaptation per chunk.

On the one hand capacity approaching codes (like "Turbo Codes, TC" and "Low Density Parity Check Codes") yield good performance for high code lengths (i.e. above some 500 bits).

On the other hand, a chunk can only carry a limited number of bits (e.g., lower than 96 bits for lowest modulation order, e.g. BSPSK, dependent on the channel properties).

The use of shorter codes implies a certain coding loss. The mapping of each codeword onto a number of different chunks, with the possibility of different modulation formats adapted to the channel seen by each chunk, has two major drawbacks:

First, if the modulation formats are dynamically adjusted, it is extremely difficult to find a proper code length - in such kind that the codeword fits into an appropriate physical layer resource unit (chunk). Moreover, it is nearly impossible to investigate the performance of such a coded modulation scheme, neither analytically nor by simulations, because there are many different ways to implement such a mapping and each mapping may introduce own interactions with code properties.

Second, the adjustment of coding and/or modulation in independent manner is normally non-optimal.

It is therefore the aim of the present invention, to provide a method for coding and modulation, which avoids the drawback described above.

This aim is solved by the features of claim 1. Advantageous details of the invention being described within the succeeding claims.

The invention proposes a general approach for the mapping of data bits on different chunks, whereas the data bits can be mapped coded or not coded in direct manner.

Different modulation formats can be used on the different chunks (or chunk layers) spanned by one codeword and these can be chosen adaptively, e.g. according to the signal to noise plus interference ratio experienced on the single chunk (or chunk layer).

The codeword can span more than one chunk where different signal constellations are used, from which the approach is referred to as non uniform modulation per codeword.

The inventive method find convenient application in a chunk-based OFDM system in which adaptive transmission in the form of link adaptation and/or adaptive chunk allocation, e.g. on TDMA (time division multiple access) and FDMA basis, is employed.

The inventive method allows high granularity in the link adaptation per chunk. The high granularity is allowed in the link adaptation per chunk by simply adjusting the number of not coded or "uncoded" bits mapped per chunk, without requiring any puncturing of the employed code nor codeword segmentation.

The number of coded bits mapped on the allocated chunks is independent of the signal constellation (modulation format) used on each chunk.

The link adaptation is performed independently on a per chunk basis and independently of the chosen code parameters, i.e. rate and length, and from the chunk size.

The inventive method can be used in conjunction with any coded modulation scheme, as described later.

The inventive method is very simple and can allow a significant reduction in implementation complexity, since only one error correction coding scheme is required.

The inventive method allows the "fine tuning" of the code parameters independently of the chosen modulation format and, hence, in case of link adaptation per chunk, of the experienced propagation conditions.

The inventive method can be used advantageously in a chunk based OFDMA/TDMA system, also together with spatial division multiple access (SDMA) component, in which the data bits of different user flows are mapped on different chunk layers separated in the spatial domain. This also includes the case of spatial multiplexing, (which is a sub-case of MIMO), i.e. the case that multiple spatially separated streams on a single chunk are assigned to a user.

Analogously, the method can be used also together with code division multiplexing (CDM) or multiple access (CDMA) component, i.e. the case in which different data flows, belonging to one user or to different users, respectively, are mapped on different chunk layers separated in code domain.

A joint optimization of code length and modulation format is possible, leading to an optimization of the number of allocated chunks (or chunk layers) towards and efficiently exploitation of resources, e.g. in an OFDMA/TDMA system with chunk based adaptive resource allocation.

The inventive method will be described by help of drawings, where:

FIG 1    shows the inventive method with partitioning, encoding and mapping,

FIG 2    shows a joint coding of chunks with different modulation alphabets, and

FIG 3    shows results of the inventive method by a comparison.

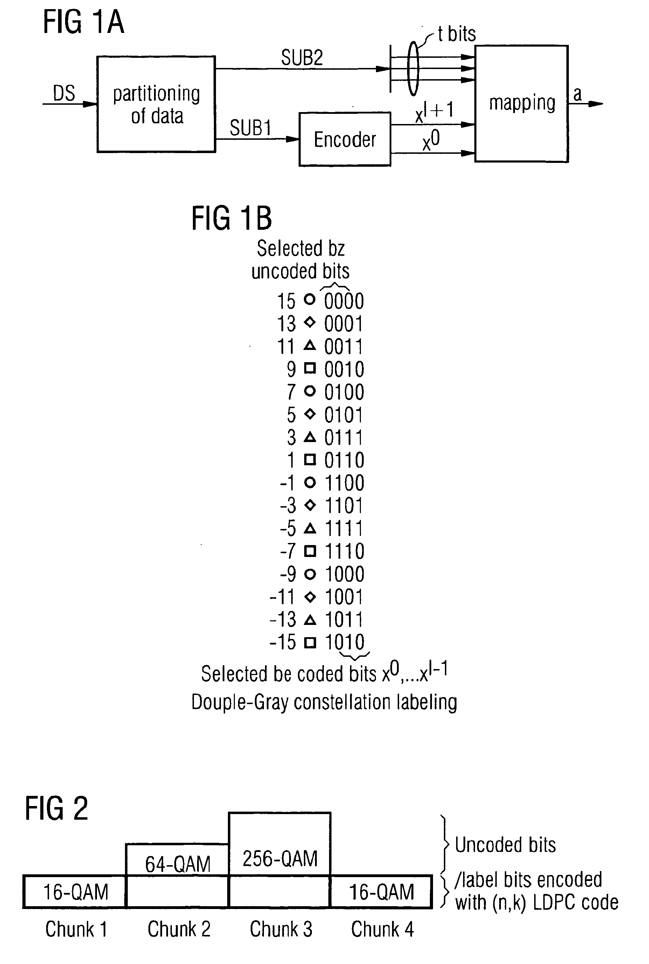

FIG 1A shows the inventive method step by step with partitioning, encoding and mapping.

A given data flow or data stream DS is partitioned into at least two sub-streams, a first sub-stream SUB1 and a second sub-stream SUB2.

The first sub-stream SUB1 may be further partitioned into a number of sub-streams, but all of them are encoded with codes whose parameters, e.g. rate and length, are independent of the signal constellation being used.

These can be chosen dependent in general on the user flow Quality of Service requirements (QoS), that is, e.g., on the required level of error protection and on the user flow delay-sensitivity.

The code length can be further chosen based on a tradeoff between the required level of error protection and a number "m" of chunks that the coded packet can be allocated for transmission.

Depending on a required performance, a fixed and equal number of coded bits "1" from these sub-streams are mapped onto each modulated symbol in all chunks, independently of the modulation format chosen on the different chunks.

Bits from the second sub-stream SUB2 are mapped on the modulated symbol of each chunk in a number depending on the chosen modulation format.

In a variant of the method described above, bits from the second sub-stream SUB2 can be kept uncoded.

In a further variant, the second sub-stream is not strictly "uncoded", but is coded significantly less than another sub-stream. E.g. the number of redundancy bit employed for this sub-stream is significantly lower than for another sub-stream (e.g. there could be used less than half as many redundancy bits).

This may be beneficial to avoid errors on this sub-stream that could be caused e.g. by sudden bursts of interference or sudden fading-holes that could cause errors even though normally no errors would be expected on this sub-stream. Therefore in the spirit of the invention and the claims, the term "uncoded" also covers the case of a coding with a significantly lower level of protection than on the other sub-streams.

In yet another variant this coding operation can be performed not only on the second sub-stream SUB2, but also on the bits used as input bits for the first sub-stream SUB1, i.e. usage of two nested codes for the first sub-stream.

In case of link adaptation on a chunk basis, the modulation format is chosen for each chunk independently, according to the signal-to-noise-plus-interference ratio (SNIR) the chunk experiences.

For example the modulation format could be described as:

$$2^{2(1+t_i)}$$

in case of QAM-modulation.

The inventive method is also suitable for mapping of code-words on different chunk layers, in case that each time-frequency chunk is reused in the spatial domain through multiple antennas (MIMO or SDMA) or in code domain (CDM or CDMA).

In case of "spatial multiplexing" often one layer shows a significantly different SNR compared to another layer. Sometimes the differences between layers are even more pronounced than the differences between different chunks in the frequency domain. With the presented approach the adaptation of modulation and coding for the different layers can be done similarly for different chunks - i.e. the handling is similar in the domains space, frequency, and time (and possibly code).

Moreover, the method is suitable for application with variants of OFDM transmission technique, e.g. DFT (Discrete Fourier Transform)-precoded OFDM, Filtered Multi Tone and Single-Carrier FDMA schemes.

FIG 1 B shows the selection of coded and not coded (uncoded) bits in a "Double-Gray" constellation labeling.

FIG 2 shows a joint coding of chunks with different modulation alphabets.

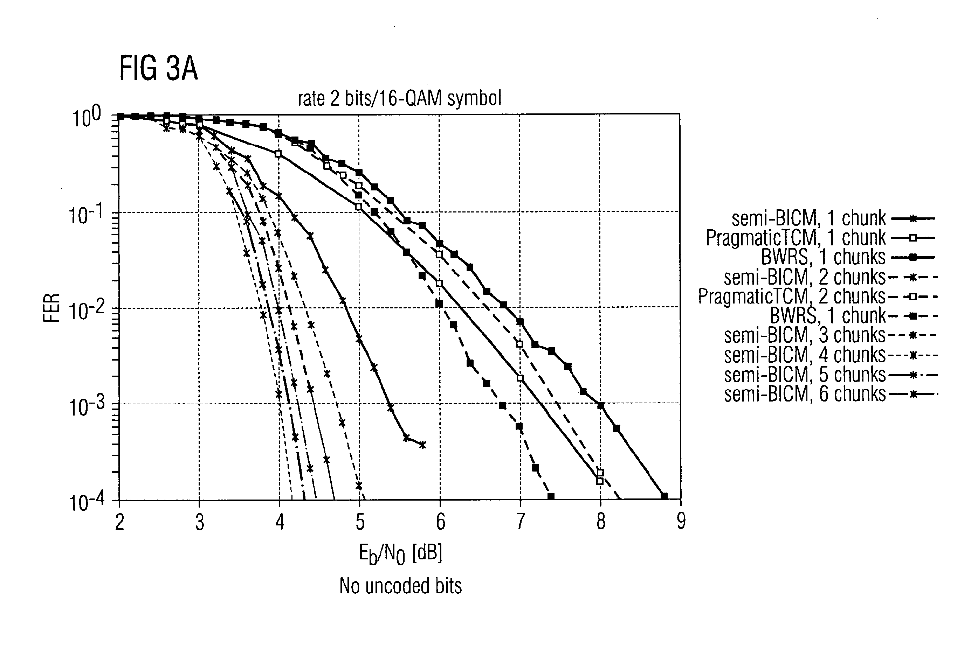

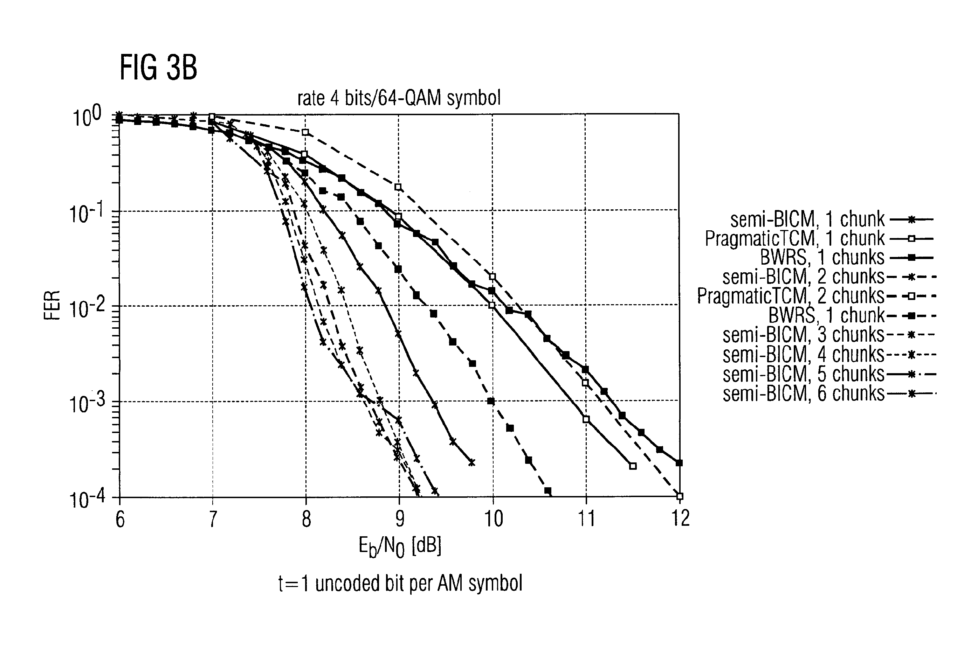

FIG 3 shows results of the inventive method by a comparison. For $2^{2(l+t)}$-QAM symbols, the needed SNR for achieving a target codeword error rate is given by $\xi=\Gamma(2^{2(l+t)}-1)$, where $\Gamma$ is a factor, which depends on a underlying binary code. In this example $\Gamma$ is a decreasing function of m, the number of chunks being encoded jointly.

**Claims**

1. Method for modulation of a codeword,

    - wherein the codeword is spanning over different chunks or chunk layers and a different modulation format can be used on each chunk or chunk layer,
    - wherein OFDM-radio transmission techniques are used within the transmission system,
    - wherein a given data stream (DS) is partitioned into at least two sub-streams (SUB1, SUB2),

    - wherein a fixed and equal number of coded bits from sub-streams, being originating from a first sub-stream (SUB1), are mapped on each modulated symbol transmitted on the chunks allocated, independently of the modulation format on each chunk, and
    - wherein bits from a second sub-stream (SUB2) are mapped on the modulated symbol of each chunk in a number depending on the chosen modulation format.

2. Method according to claim 1, wherein the first sub-stream (SUB1) is partitioned into a number of sub-streams, each sub-stream being encoded with codes, whose parameters are independent of the used modulation format or signal constellation.

3. Method according to claim 1 or 2, wherein the mapping of the fixed and equal number of coded bits from sub-streams, being originating from a first sub-stream (SUB1), is done in dependency on a required performance additionally.

4. Method according to one of the preceding claims,

    - wherein the bits of the second sub-stream (SUB2) are uncoded, or
    - wherein the bits of the second sub-stream (SUB2) are coded with a lower protection-level than the bits of other sub-streams.

5. Method according to one of the preceding claims, wherein a code length is chosen based on a tradeoff between a required level of error protection on the on e hand and of the number of chunks or resource units that the coded packet data can be allocated for transmission on the other hand.

6. Method according to one of the preceding claims, wherein link adaptation per chunk is done by varying the number of bits from the second sub-stream (SUB2) mapped on a single chunk according to a SNIR-value experienced by the chunk hence the supported modulation format.

7. Method according to one of the preceding claims, wherein the code parameters are chosen independently of the modulation format chosen for each allocated chunk and independently of the chunk size.

8. Method according to one of the preceding claims, wherein a combination of OFDMA with TDMA and/or CDMA or spatial radio transmission techniques are used within the transmission system.

9. Method according to one of the preceding claims, wherein code-words, built by coding of data with a selected error-correcting-code, are mapped onto signal constellations, selected accordingly to a current channel state.

10. Method according to one of the preceding claims,

    - wherein, depending on a required performance, a fixed and equal number of coded bits 1 is mapped on each of the allocated chunks,

    - wherein link adaptation per chunk is done by mapping a certain number of bits $t_i$, with i=1,2,..m, from the second sub-stream (SUB2) on a i-th chunk and according to a modulation format,

    - wherein the modulation format is done with:

$$2^{2(1+t_i)}$$

    in case of QAM-modulation.

11. Method according to one of the preceding claims, wherein codewords on different chunk *layers are mapped,* in case that each time-frequency chunk is reused in a spatial domain through multiple antennas or in code domain.

## FIG 1A

## FIG 1B

Selected bz
uncoded bits

| | | |
|---|---|---|
| 15 | ○ | 0000 |
| 13 | ◇ | 0001 |
| 11 | △ | 0011 |
| 9 | □ | 0010 |
| 7 | ○ | 0100 |
| 5 | ◇ | 0101 |
| 3 | △ | 0111 |
| 1 | □ | 0110 |
| -1 | ○ | 1100 |
| -3 | ◇ | 1101 |
| -5 | △ | 1111 |
| -7 | □ | 1110 |
| -9 | ○ | 1000 |
| -11 | ◇ | 1001 |
| -13 | △ | 1011 |
| -15 | □ | 1010 |

Selected be coded bits $x^0, ... x^{l-1}$
Douple-Gray constellation labeling

## FIG 2

7

## FIG 3A

rate 2 bits/16-QAM symbol

No uncoded bits

semi-BICM, 1 chunk —✳—
PragmaticTCM, 1 chunk —□—
BWRS, 1 chunks —■—
semi-BICM, 2 chunks –✳–
PragmaticTCM, 2 chunks –□–
BWRS, 1 chunk –■–
semi-BICM, 3 chunks –✳ –
semi-BICM, 4 chunks ---✳---
semi-BICM, 5 chunks —✳–
semi-BICM, 6 chunks —✳·–

EP 1 835 683 A1

# FIG 3B

rate 4 bits/64-QAM symbol

t=1 uncoded bit per AM symbol

semi-BICM, 1 chunk
PragmaticTCM, 1 chunk
BWRS, 1 chunks
semi-BICM, 2 chunks
PragmaticTCM, 2 chunks
BWRS, 1 chunk
semi-BICM, 3 chunks
semi-BICM, 4 chunks
semi-BICM, 5 chunks
semi-BICM, 6 chunks

EP 1 835 683 A1

**European Patent Office**

## EUROPEAN SEARCH REPORT

Application Number

EP 06 00 5411

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/136317 A1 (OELCER SEDAT ET AL) 26 September 2002 (2002-09-26) * paragraphs [0027], [0031], [0032], [0044] * * figure 2 * | 1-11 | INV. H04L27/34 H04L1/00 ADD. H04L27/26 |
| X | LI B ET AL: "A NEW TURBO CODED QAM SCHEME WITH VERY LOW DECODING COMPLEXITY FOR ADSL SYSTEM" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, vol. VOL. 1 OF 6, 25 November 2001 (2001-11-25), pages 349-353, XP001090275 ISBN: 0-7803-7206-9 * page 351, left-hand column, last paragraph * * figure 3 * | 1-11 | |
| A | LIANG ZHANG ET AL: "Turbo coding for transmission over ADSL" COMMUNICATION TECHNOLOGY PROCEEDINGS, 2000. WCC - ICCT 2000. INTERNATIONAL CONFERENCE ON BEIJING, CHINA 21-25 AUG. 2000, PISCATAWAY, NJ, USA,IEEE, US, 21 August 2000 (2000-08-21), pages 124-131, XP010526727 ISBN: 0-7803-6394-9 * page 127, left-hand column, paragraph 2 * * figure 5 * | 1-11 | **TECHNICAL FIELDS SEARCHED (IPC)** H04L |

The present search report has been drawn up for all claims

| Place of search | Date of completion of the search | Examiner |
|---|---|---|
| Berlin | 16 August 2006 | Feng, M |

EPO FORM 1503 03.82 (P04C01)

## ANNEX TO THE EUROPEAN SEARCH REPORT
## ON EUROPEAN PATENT APPLICATION NO.

EP 06 00 5411

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2006

| Patent document cited in search report | Publication date | Patent family member(s) | Publication date |
|---|---|---|---|
| US 2002136317 A1 | 26-09-2002 | NONE | |

For more details about this annex : see Official Journal of the European Patent Office, No. 12/82